# FASCICULE DE BREVET EUROPEEN

(11) **EP 1 634 743 B1**
(45) Date de publication et mention de la délivrance du brevet: **22.04.2009**
(21) Numéro de dépôt: 05108210.5
(22) Date de dépôt: 07.09.2005
(51) Int. Cl.: B60J 1/20

(54) **Store à enrouleur à barre de tirage déformable, et véhicule correspondant**
Fensterrollo mit verformbarer Zugleiste, und korrespondierendes Fahrzeug
Roller blind with deformable pull bar, and corresponding vehicle

(30) Priorité: 07.09.2004 FR 0409494
(43) Date de publication de la demande: 15.03.2006
(73) Titulaire: Wagon SAS, 79302 Bressuire Cédex (FR)
(72) Inventeur: Jolivet, David, 79300 Bressure (FR)
(74) Mandataire: Bioret, Ludovic

(56) Documents cités:
- EP-A- 1 129 872
- DE-A1- 4 041 341
- DE-A1- 10 064 513
- DE-U1- 29 621 563
- FR-A- 2 749 878

## Description

### 1. Domaine de l'invention

Le domaine de l'invention est celui de l'occultation d'une surface vitrée d'un véhicule automobile.

Plus précisément, l'invention concerne les stores à enrouleur destiné à occulter des surfaces dont au moins un bord n'est pas rectiligne, et par exemple une vitre latérale d'un véhicule automobile.

### 2. Solutions de l'art antérieur

Les stores à enrouleur équipant les véhicules sont classiquement composés d'un tube enrouleur, d'une toile, et d'une barre de tirage rigide. Le tube à enrouleur peut être monté dans un boîtier, ou logé dans la garniture du véhicule, par exemple pour une portière, se fixe en dessous de la surface vitrée. La barre de tirage, quand le store est déployé, se fixe en haut de la surface vitrée, au voisinage du pavillon.

Ce système présente des inconvénients quand le haut et le bas de la surface vitrée ne sont pas parallèles, ce qui est souvent le cas dans les véhicules automobiles. Souvent, en effet, le haut des surfaces vitrées présente un aspect galbé adapté au design du véhicule.

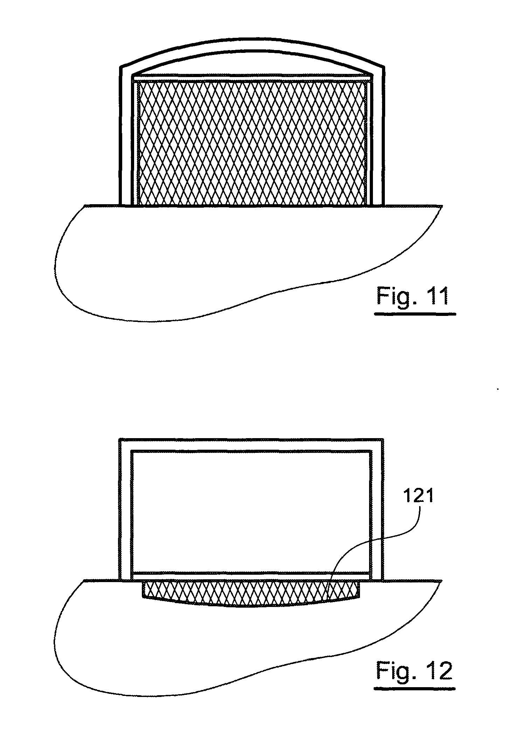

Généralement, la barre de tirage est rectiligne. Dans ce cas, elle n'épouse pas la forme galbée du haut de la surface vitrée. Celle-ci ne pourra donc pas être entièrement occultée, comme illustré en figure 11 : l'espace supérieur n'est pas occulté.

On pourrait envisager de réaliser une barre de tirage ayant au contraire une forme galbée identique à celle du haut de la surface vitrée. Le store fermé pourrait alors occulter entièrement la surface vitrée, y compris la portion supérieure. En revanche, cette solution présente des inconvénients quand le store est replié. La barre de tirage, en effet, n'épousera pas la forme de la garniture intérieure, comme illustré schématiquement en figure 12. La toile ne pénètre alors pas intégralement à l'intérieur de la fente 121, une partie reste visible. En outre, cela permet le passage de petits objets ou de poussière à l'intérieur de la garniture du véhicule, ce qui peut abîmer le mécanisme.

En outre, les tolérances de construction des véhicules automobile étant ordinairement assez importantes, il est difficile de garantir qu'un store déployé occultera parfaitement l'ouverture, épousera complètement la garniture, ou présentera un aspect parfaitement tendu.Il est donc souvent nécessaire soit de procéder à un réglage du store, soit d'introduire un système de compensation des jeux par un système de ressorts au niveau du tube enrouleur ou au niveau de l'attache de la barre de tirage.

Encore un autre problème des stores classiques est que, notamment du fait de ces jeux, la barre de tirage peut générer des bruits, dus à des chocs contre la garniture ou la vitre.

On connaît du document DE 100 64 513 un store à enrouleur dont la barre de tirage comporte un élément rigide solidaire de l'extrémité de la toile d'occultation, et un élément déformable pouvant prendre la forme de l'élément rigide afin d'épouser la forme du haut de la vitre occultée, ou la forme du bas de la vitre occultée quand le store est replié.

### 4. Objectifs de l'invention

L'invention a notamment pour objectif de pallier ces inconvénients de l'art antérieur.

Plus précisément, un premier objectif de l'invention est de fournir un store occultant efficacement la partie distale de la surface vitrée, lorsque la toile est déployée, même si les bords de cette surface vitrée ne sont pas rectilignes, et/ou non parallèles. La partie distale de la surface vitrée est celle qui est éloignée du tube enrouleur. La partie proximale est celle qui est voisine de ce tube.

Un deuxième objectif de l'invention est de fournir un store ne laissant pas apparaître une partie de la toile, ou la fente de passage de celle-ci, lorsque le store est replié, même si la garniture intérieure au niveau de cette fente n'est pas parallèle à la barre de tirage, et/ou non rectiligne.

Selon les cas, ces premiers et deuxièmes objectifs peuvent être indépendants ou conjoints.

Un autre objectif de l'invention est de fournir un tel store qui ne nécessite pas de réglage ni de moyens de compensation complexes pour compenser des jeux de montage.

L'invention a encore pour objectif de fournir un store qui ne nécessite pas de butées anti-bruits qui sont généralement utilisés pour éviter le bruit de vibrations généré par la barre de tirage, ni d'autres moyens complexes anti-bruits.

### 5. Caractéristiques essentielles de l'invention

Ces objectifs, ainsi que d'autres qui apparaîtront par la suite, sont atteints à l'aide d'un store à enrouleur pour véhicule automobile, comprenant une toile d'occultation dont une première extrémité est solidaire d'un tube enrouleur et une seconde extrémité est solidaire d'une barre de tirage, la barre de tirage comportant un élément rigide d'entraînement de la toile solidaire de la seconde extrémité de la toile d'occultation, et au moins un élément déformable d'accrochage à, et/ou d'appui sur, un élément de la carrosserie et/ou la garniture intérieure du véhicule. Selon l'invention, l'élément déformable présente deux éléments de solidarisation pénétrant respectivement dans des ouvertures situées à chacune des extrémités de l'élément rigide, de façon à être mobile entre au moins deux positions :
- une première position parallèle à ladite seconde extrémité de ladite toile d'occultation (3) ;
- une seconde position non parallèle à ladite seconde extrémité de ladite toile d'occultation, dans laquelle il épouse sensiblement un profil défini par la carrosserie et/ou la garniture intérieure dudit véhicule.

Ainsi, la barre de tirage, grâce à cet élément déformable, peut s'adapter aussi bien à la forme des bords proximal et distal de la surface vitrée. Par ses capacités de déformation, il permet en outre de compenser les jeux de montage et d'amortir des vibrations pouvant causer des bruits.

De façon avantageuse, la barre de tirage comprend au moins un élément rigide d'entraînement de la toile, sur lequel est montée la seconde extrémité de la toile d'occultation, et au moins un élément d'accrochage à, et/ou d'appui sur, un élément de la carrosserie et/ou la garniture intérieure du véhicule, mobile par rapport à l'élément rigide d'entraînement.

Ainsi, la toile du store reste maintenue par un élément rigide d'entraînement de toile qui permet de la tendre correctement, alors qu'un autre élément s'adapte aux formes des extrémités de la surface vitrée.

Selon un mode de réalisation avantageux, l'élément rigide d'entraînement est rectiligne.

Ce mode de réalisation permet de réaliser l'invention en conservant la structure classique des stores à enrouleurs.

Préférentiellement, dans ce cas, l'élément déformable est relié à l'élément rigide par les extrémités de ce dernier.

De cette façon, l'élément déformable peut savoir sa déformation maximum au milieu de la barre de tirage.

Selon un autre mode de réalisation avantageux, l'élément rigide d'entraînement est galbé.

Avantageusement, dans ce cas, l'élément déformable est relié à l'élément rigide par une liaison unique, sensiblement au milieu de l'élément rigide.

Ainsi, la déformation maximale de l'élément déformable pourra être à ses extrémités, et pourra éventuellement être différente entre ces deux extrémités.

Selon un aspect préférentiel de l'invention, l'élément d'accrochage et/ou d'appui est flexible.

Selon un des modes de mise en oeuvre de l'invention, l'élément d'accrochage et/ou d'appui est configuré de façon à prendre un profil non homogène, correspondant au profil défini par la carrosserie et/ou la garniture intérieure du véhicule. Il peut bien sûr aussi être homogène.

De façon avantageuse, ce profil non homogène est obtenu à l'aide d'au moins un des moyens appartenant au groupe suivant :
- mise en oeuvre d'au moins deux matériaux différents ;
- mise en oeuvre d'au moins deux sections différentes ;
- ajout d'au moins un renfort.

Par ailleurs, selon un mode de réalisation particulier de l'invention, l'élément rigide présente des ouvertures à chacune de ces extrémités, et l'élément d'accrochage et/ou d'appui présente deux éléments de solidarisation pénétrant respectivement dans chacune des ouvertures, et étant mobile au moins en rotation sur une plage de déplacement prédéterminée, par rapport à l'élément rigide.

Cette liaison permet à l'élément déformable de garder une mobilité en rotation par rapport à l'élément rigide, ce qui lui permet de se déformer plus facilement.

De façon préférentielle, au moins un des éléments de la solidarisation se présente sous la forme d'un insert, ou une tige, pénétrant à l'intérieur de l'ouverture de l'élément rigide.

Avantageusement, l'insert porte une boule, ou bille, de guidage, de diamètre sensiblement égal (légèrement inférieur) au diamètre intérieur de l'ouverture.

Selon un autre mode de mise en oeuvre avantageux de l'invention, l'élément déformable est clippé sur l'élément rigide.

Ce mode d'assemblage présente l'avantage d'être particulièrement facile à mettre en oeuvre.

Selon un mode de réalisation avantageux, l'élément déformable est réalisé en matière plastique ou en caoutchouc thermoplastique (TPE).

Ces matériaux, en effet, permettent de réaliser facilement des pièces de forme complexe et présentent une souplesse adaptée aux besoins.

L'élément déformable peut comprendre un axe en acier surmoulé.

Ce mode de réalisation permet de contrôler la flexibilité de l'élément déformable.

Préférentiellement, l'élément déformable porte au moins une patte de préhension, ou patte de tirage, qui peut être clippée sur l'axe en acier.

Selon une approche particulière de l'invention, en position déployée de la toile, l'élément déformable épouse la forme d'une partie supérieure d'une vitre du véhicule.

Selon une autre approche de l'invention, en position repliée de la toile, l'élément déformable épouse la forme de la garniture intérieure du véhicule, au voisinage d'une fente par laquelle circule la toile.

Ces deux approches peuvent être cumulées, ou mises en oeuvre indépendamment.

Préférentiellement, l'élément déformable présente au moins un flanc de taille suffisante pour occulter un jour entre la carrosserie et/ou la garniture intérieure du véhicule, lorsque la toile est déployée et/ou repliée.

L'invention concerne également un véhicule automobile comprenant au moins un store à enrouleur tel que décrit ci-dessus.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente de façon schématique un store selon l'invention en position repliée ;
- la figure 2 présente de façon schématique le store de la figure 1 en position déployée ;
- les figures 3a et 3b présentent schématiquement deux formes pouvant être prises par des barres d'accrochage selon l'invention dans la position déployée du store ;
- les figures 4a et 4b illustrent schématiquement deux possibilités offertes par un store selon l'invention en position repliée ;
- la figure 5 montre une section des éléments constituant un store selon l'invention ;
- les figures 6a et 6b présentent en vue de coupe deux possibilités de solidarisation de la barre d'accrochage avec la barre d'entraînement, dans un store selon l'invention ;
- les figures 7a et 7b présentent une barre d'accrochage d'un store selon l'invention réalisée en matière plastique ou en caoutchouc thermoplastique(TPE) avec une patte de tirage intégrée ;
- la figure 8 présente une barre d'accrochage d'un store selon l'invention réalisée en acier surmoulé avec une patte de tirage amovible ;
- la figure 9 présente les éléments d'un store selon l'invention dans le cas ou l'élément rigide d'entraînement est galbé et ou l'élément déformable y est lié par une liaison unique ;
- les figures 10a et 10b présentent de façon schématique les positions pouvant être prises par le store de la figure 9 ;
- la figure 11 présente une surface vitrée de véhicule automobile dont le haut est galbé, occulté par un store selon l'art antérieur ;
- la figure 12 présente une surface vitrée dont le bas est galbé, avec un store replié selon l'art antérieur.

### 7. Description d'un mode de réalisation de l'invention

Le principe général de l'invention repose donc sur la réalisation d'une barre de tirage en (au moins) deux parties : une partie rigide et une partie déformable, par exemple flexible. La partie fixe est solidarisée à la toile, selon l'approche classique. La partie déformable est solidarisée à la partie fixe, et se déforme par rapport à celle-ci, de façon à épouser le profil (non parallèle à la partie fixe de la barre de tirage) de la partie supérieure de la vitre (lorsque le store est déployé) et/ou à sa partie inférieure, au niveau de la garniture inférieure du véhicule (lorsque le store est replié).

On décrit ci-après plusieurs modes de réalisation, dans lesquels la partie flexible est adaptée pour occulter la partie supérieure d'une vitre latérale d'un véhicule (§7.1) ou la partie inférieure (§7.2).

### 7.1 Adaptation au haut de la surface vitrée

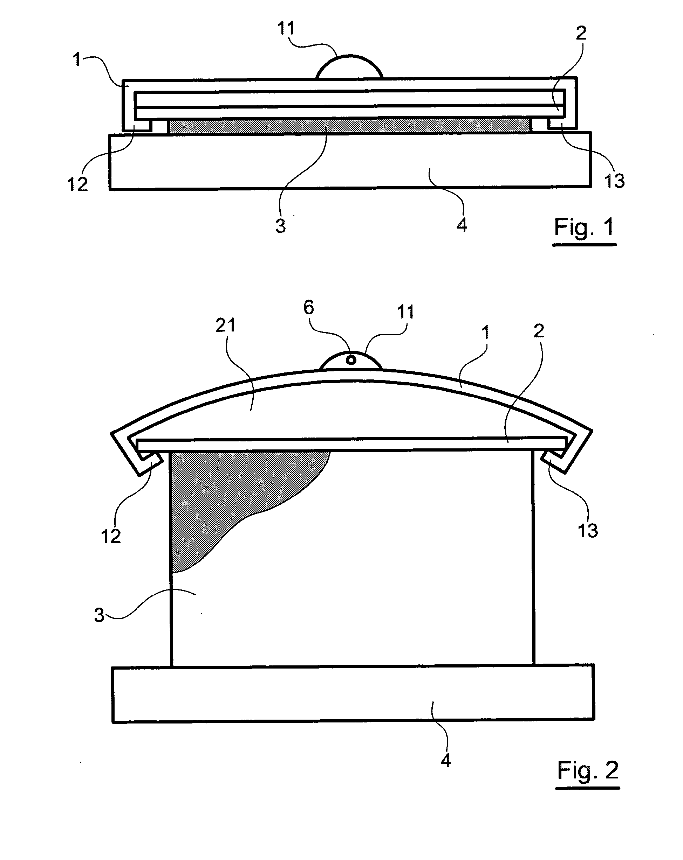

La figure 1 montre schématiquement un store selon un premier mode de réalisation de l'invention en position repliée. La figure 2 montre ce même store en position déployée. Ces figures sont des schéma de principe, exagérant volontairement certains aspects. En particulier, les déformations de l'élément déformable sont exagérées, pour une meilleure compréhension du principe de l'invention. Préférentiellement, en effet, la structure de la partie flexible est conçue pour occulter complètement l'espace 21.

L'enrouleur du store représenté sur ces figures est situé en bas d'une surface vitrée d'un véhicule automobile. Dans cette description, la partie proximale de la surface vitrée est donc le bas de cette surface, et la partie distale est le haut de cette surface. La même approche peut bien sûr être mise en oeuvre dans d'autres dispositions, par exemple si le tube enrouleur est monté en partie supérieure (déploiement vers le bas), ou de façon à se déplacer latéralement.

Ce store est constitué classiquement d'une toile 3, d'un dispositif de tube enrouleur 4, et d'une barre de tirage. La barre de tirage, selon l'invention, est constituée de deux éléments : le premier est un élément rigide d'entraînement de toile, ou barre d'entraînement 2, rigide, qui est solidaire du haut de la toile, le second est un élément d'accrochage à, et/ou d'appui sur un élément de carrosserie et/ou la garniture intérieure du véhicule, ou barre d'accrochage 1, déformable.

Des dispositifs de liaison 12 et 13 permettent de solidariser la barre d'entraînement et la barre d'accrochage. Ces dispositifs de liaison permettent un mouvement angulaire de la barre d'accrochage par rapport à la barre d'entraînement. Ainsi, ces dispositifs ne perturbent pas la flexion de la barre d'accrochage.

La barre d'accrochage comprend des moyens d'accrochage 11 prévus pour s'accrocher à un point d'accrochage 6 quand le store est déployé. La toile sera alors tendue une la traction exercée par des moyens de rappel (non représentés) montés sur l'enrouleur logé dans la garniture. La barre d'accrochage souple 1 subit donc une traction vers le bas au niveau de ses liaisons avec la barre d'entraînement, alors qu'elle est maintenue par son attache 11 au point d'accrochage 6. Sous l'effet de cette traction, elle se déforme.

La rigidité de la barre d'accrochage 1 et la force de rappel du tube enrouleur sont calculées pour que la barre d'accrochage déformée prenne une forme galbée souhaitée. Cette forme peut correspondre au galbe du haut de la surface vitrée du véhicule. Ainsi, la barre de tirage du store aura la forme rectiligne du bas de la surface vitrée quand le store sera replié (figure 1), et la forme galbée du haut de cette surface virée quand le store sera déployé (figure 2).

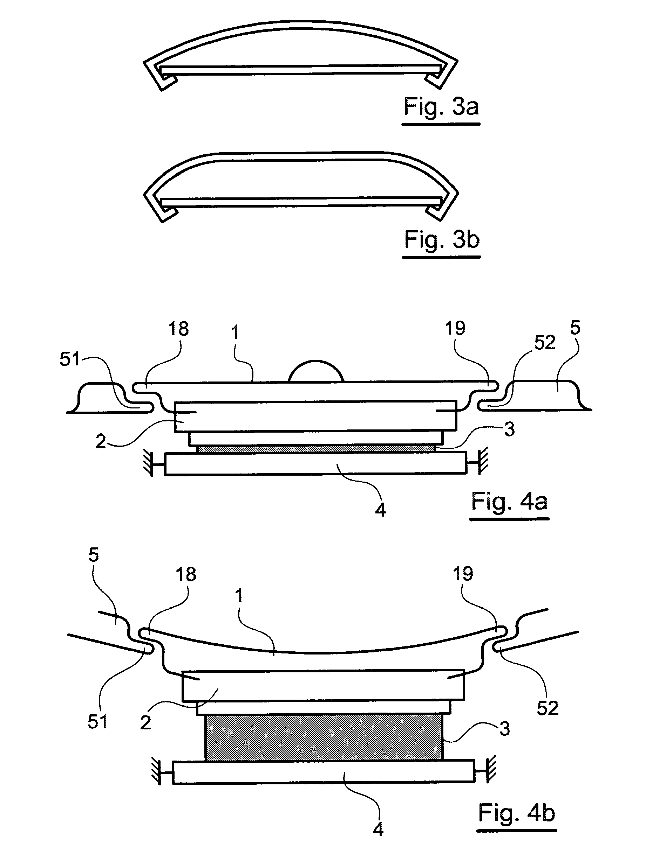

Pour mieux s'adapter à la forme supérieure de la surface vitrée, la barre d'accrochage 1 peut prendre en se déformant des formes diverses. Les figures 3a et 3b montrent deux exemples de formes pouvant être prises par la barre d'accrochage en déformation. En particulier, la barre d'accrochage peut avoir une souplesse homogène sur sa longueur, qui causera une déformation régulière de la barre, telle que représentée sur la figure 3a. Elle peut également avoir une souplesse non homogène, ce qui lui permettra de prendre des formes différentes, comme par exemple celle représentée sur la figure 3b.

Ces formes peuvent être obtenues en fabriquant la barre d'accrochage avec des parties plus épaisse, et donc plus rigides, et des parties plus fines, donc plus souples. Une autre solution peut être de rajouter des renforts sur la barre d'accrochage 1, pour rigidifier certaines parties, ou d'utiliser des matériaux différents.

### 7.2 Adaptation au bas de la surface vitrée.

Dans la position refermée du store, la barre d'accrochage peut avantageusement prendre la forme de la garniture du véhicule, comme le montre les figures 4a et 4b. On voit en effet que la garniture 5 du véhicule présente des surfaces d'appui 51 et 52 adaptée pour coopérer avec cette barre d'accrochage. La barre d'accrochage présente, elle, des pattes d'appui 18 et 19 destinées à venir s'appuyer sur les surfaces 51 et 52 respectivement.

La barre d'accrochage 1 flexible peut prendre la forme de la garniture du véhicule qui peut être droite, comme représenté sur la figure 4a, ou galbée, comme représenté sur la figure 4b. Dans ce dernier cas, la tension appliquée par les moyens de rappel force la partie fléxible1 à s'incurver pour s'adapter au profil de la garniture. On peut bien sûr imaginer que cette barre d'accrochage prenne des formes encore différentes en fonction des besoins.

### 7.3 Eléments constitutifs du store.

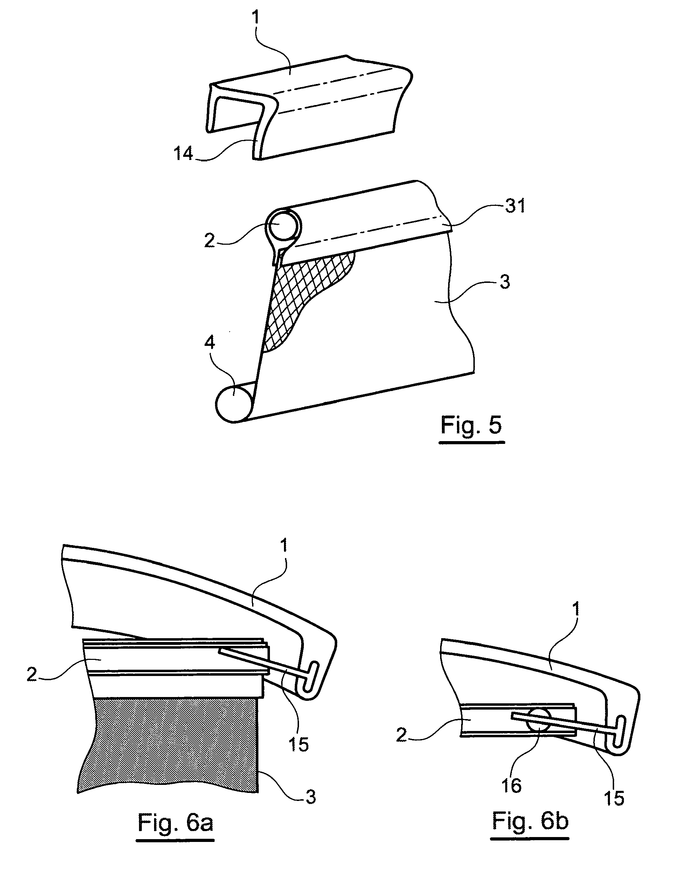

La figure 5 montre les éléments nécessaires à la fabrication d'un store selon un mode de réalisation de l'invention. Pour des raisons de simplicité, on ne représente qu'une section de ces éléments, n'incluant pas les extrémités. On peut donc voir un élément de store classique à enrouleur, constitué d'une toile 3, d'un tube enrouleur 4 autour duquel s'enroule la toile 3, et d'une barre d'entraînement 2 constituée d'un tube. La toile est liée au tube par un ourlet 31.

La barre d'accrochage 1, dont une portion est représentée sur cette figure 5, est destinée à recouvrir la barre d'entraînement 2. Elle comprend notamment un flanc, ou un cache 14 qui est destiné à occulter les espaces 21 pouvant apparaître entre la barre d'accrochage 1 et la barre d'entraînement 2.

### 7.4 Assemblage des éléments.

Les figures 6a et 6b représentent une vue de coupe d'une extrémité de la barre de tirage selon deux modes de réalisation de l'invention. Par souci de simplicité, on ne présente ici qu'une seule des deux extrémités de la barre de tirage, la seconde étant symétrique de la première.

Selon le premier mode de réalisation, représenté par la figure 6a, le dispositif de liaison 13 de la figure 2 est un insert ou une tige 15 fixée à la barre d'accrochage 1, qui est conçue pour pénétrer dans un tube formant barre d'entraînement 2.

La tige 15 étant d'un diamètre très inférieur à celui du tube 2, elle forme donc un dispositif de liaison permettant un déplacement angulaire et un coulissement de la barre d'accrochage 1 par rapport à la barre d'entraînement 2.

Selon un deuxième mode de réalisation, représenté par la figure 6b, une boule ou une bille 16 est fixée sur la tige 15 du dispositif précédent. La bille 16 est d'un diamètre légèrement inférieur au diamètre intérieur du tube formant barre d'entraînement 2, et peut donc tourner dans celui-ci. L'ensemble formé de la bille 16 et de la tige 15 forme donc également un dispositif de liaison permettant un déplacement angulaire et un coulissement de la barre d'accrochage 1 par rapport à la barre d'entraînement 2.

### 7.5 Réalisation de la barre de tirage flexible.

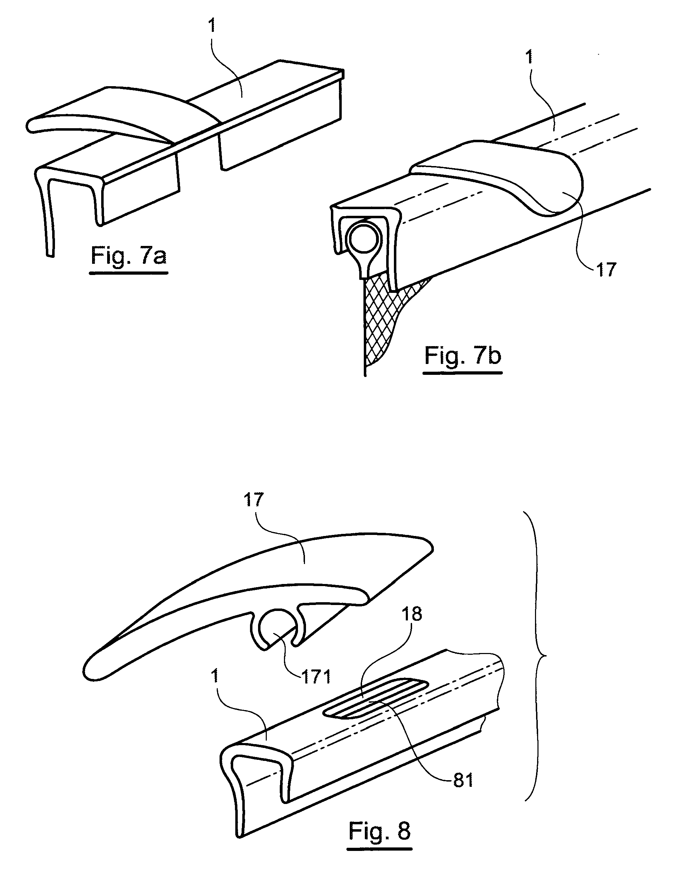

La barre d'accrochage du store peut être réalisée classiquement en matière plastique ou en caoutchouc thermoplastique (TPE) par un procédé classique d'injection. Dans ce cas, comme représenté sur les figures 7a et 7b, elle pourra avantageusement être injectée avec une patte de tirage 17 en son centre.

Selon un autre mode de réalisation, représenté par la figure 8, la barre d'accrochage peut être réalisée en acier surmoulé. Dans ce cas, la partie flexible 1 est moulée sur une tige en acier 81. Une patte de préhension, ou patte de tirage 17 fabriquée séparément et comportant un élément de clippage 171 peut venir se clipper à un emplacement prédéterminé 18 de la barre d'accrochage 1. Cette solution permet d'avoir une patte de tirage 17 mobile en rotation. L'usage d'acier surmoulé permet également d'avoir une barre d'accrochage dont la flexibilité est contrôlée. La largeur de la tige d'acier sera alors déterminée en fonction de la souplesse désirée et, éventuellement, de la tenue en température nécessaire.

### 7.6 Mode de réalisation avec une barre rigide galbée

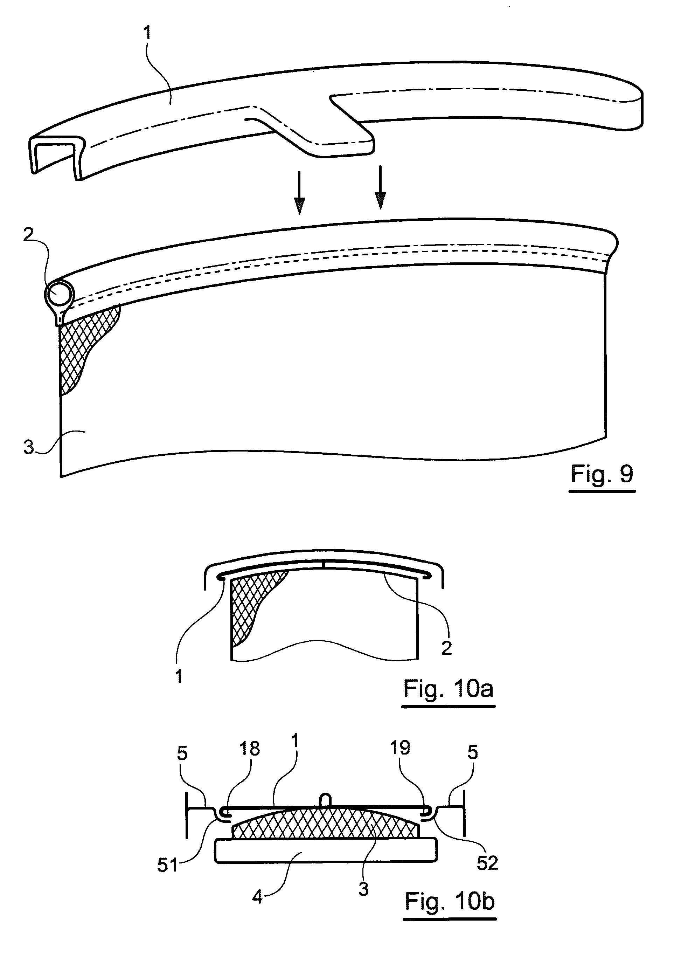

Selon un autre mode de réalisation, représenté par les figures 9, 10a et 10b, qui n'est pas couvert par les revendications mais fait partie de l'état de la technique qui est utile à la compréhension de l'invention, la barre d'entraînement 2 a une forme non rectiligne, par exemple pour mieux s'adapter à la forme du haut de la surface vitrée. La barre d'accrochage souple 1 est liée à la barre d'entraînement 2 par une liaison fixe unique, qui peut être au centre de la barre de tirage.

Dans ce mode de réalisation, la barre d'accrochage 1 peut avantageusement être naturellement galbée et épouser la forme de la barre d'entraînement. Comme le montre la figure 10a, la barre d'entraînement et la barre d'accrochage peuvent alors s'adapter parfaitement au haut de la surface vitrée, s'adaptant aussi bien à la forme du haut de la surface vitrée quand le store est déployé.

Dans la position repliée du store, la barre d'accrochage peut prendre la forme de la garniture du véhicule, comme le montre la figure 10b. On voit en effet que la garniture 5 du véhicule présente des surfaces d'appui 51 et 52 adaptée pour coopérer avec la barre d'accrochage. La barre d'accrochage présente, elle, des pattes d'appui 18 et 19 destinées à venir s'appuyer sur les surfaces 51 et 52 respectivement.

La barre d'accrochage souple 1 peut alors prendre la forme du bas de la surface vitrée, par exemple une forme rectiligne, comme illustré par la figure 10b.

### 7.7 D'autres modes de réalisation possibles.

L'homme du métier pourra imaginer de nombreuses variantes aux modes de réalisation de l'invention présentés ci-dessus.

On peut par exemple imaginer que la barre d'accrochage puisse se déformer de façon non symétrique, par exemple en étant liée par une liaison fixe à la barre d'entraînement en un seul point situé sur un coté de la barre de tirage.

On peut également prévoir que la partie déformable ne soit pas flexible (ou pas uniquement flexible), mais constituée d'éléments articulés et/ou coulissants.

## Revendications

1. Store à enrouleur pour véhicule automobile, comprenant une toile d'occultation (3) dont une première extrémité est solidaire d'un tube enrouleur (4) et une seconde extrémité est solidaire d'une barre de tirage, ladite barre de tirage comportant un élément rigide d'entraînement de la toile (2) solidaire de la seconde extrémité de ladite toile d'occultation (3), et au moins un élément déformable (1) d'accrochage à, et/ou d'appui sur, un élément de la carrosserie et/ou la garniture intérieure (5) dudit véhicule, ledit élément déformable étant mobile entre au moins deux positions :
- une première position parallèle à ladite seconde extrémité de ladite toile d'occultation (3) ;
- une seconde position non parallèle à ladite seconde extrémité de ladite toile d'occultation (3), dans laquelle il épouse sensiblement un profil défini par la carrosserie et/ou la garniture intérieure (5) dudit véhicule,
**caractérisé en ce que** ledit élément déformable (1) présente deux éléments de solidarisation pénétrant respectivement dans des ouvertures situées à chacune des extrémités dudit élément rigide.

2. Store à enrouleur selon la revendication 1, **caractérisé en ce que** ledit élément rigide d'entraînement (2) est rectiligne.

3. Store à enrouleur selon l'une quelconque des revendications 1 et 2, **caractérisé en ce que** ledit élément rigide d'entraînement (2) est un élément tubulaire.

4. Store à enrouleur selon l'une quelconque des revendications 1 à 3, **caractérisé en ce que** ledit élément déformable (1) est configuré de façon à prendre, dans ladite seconde position, un profil non homogène, correspondant au profil défini par la carrosserie et/ou la garniture intérieure (5) dudit véhicule.

5. Store à enrouleur selon la revendication 4, **caractérisé en ce que** ledit profil non homogène est obtenu à l'aide d'au moins un des moyens appartenant au groupe suivant:
- mise en oeuvre d'au moins deux matériaux différents ;
- mise en oeuvre d'au moins deux sections différentes ;
- ajout d'au moins un renfort.

6. Store à enrouleur selon l'une quelconque des revendications 1 à 5, **caractérisé en ce qu'**au moins un desdits éléments de la solidarisation se présente sous la forme d'un insert (15) pénétrant à l'intérieur de l'ouverture dudit élément rigide (2).

7. Store à enrouleur selon la revendication 6, **caractérisé en ce que** ledit insert (15) porte une boule de guidage (16), de diamètre sensiblement égal au diamètre intérieur de ladite ouverture.

8. Store à enrouleur selon l'une quelconque des revendications 1 à 7, **caractérisé en ce que** ledit élément déformable (1) est réalisé en matière plastique ou en caoutchouc thermoplastique (TPE).

9. Store à enrouleur selon la revendication 8, **caractérisé en ce que** ledit élément déformable (1) comprend un axe en acier (81) surmoulé.

10. Store à enrouleur selon l'une quelconque des revendications 1 à 9, **caractérisé en ce que** ledit élément déformable (1) porte au moins une patte de préhension (17).

11. Store à enrouleur selon les revendications 9 et 10, **caractérisé en ce que** ladite patte (17) est clippée sur ledit axe en acier (81).

12. Store à enrouleur selon l'une quelconque des revendications 1 à 11, **caractérisé en ce qu'**en position déployée de ladite toile (3), ledit élément déformable (1) épouse la forme d'une partie supérieure d'une vitre dudit véhicule.

13. Store à enrouleur selon l'une quelconque des revendications 1 à 12, **caractérisé en ce qu'**en position repliée de ladite toile (3), ledit élément déformable (1) épouse la forme de la garniture intérieure (5) dudit véhicule, au voisinage d'une fente par laquelle circule ladite toile (3).

14. Store à enrouleur selon l'une quelconque des revendications 1 à 13, **caractérisé en ce que** ledit élément déformable (1) présente au moins un flanc (14) de taille suffisante pour occulter un jour entre la carrosserie et/ou la garniture intérieure (5) dudit véhicule, lorsque ladite toile (3) est déployée et/ou repliée.

15. Véhicule automobile comprenant au moins un store à enrouleur selon la revendication 1.

## Claims

1. A roller blind for an automobile, comprising a shielding cloth (3) wherein a first end is integral with a roller tube (4) and a second end is integral with a pull bar, said pull bar comprising a rigid element for driving the cloth (2) integral with the second end of said shielding cloth (3), and at least one deformable element (1) for anchoring to and/or bearing on an element from the body and/or the upholstery (5) of said vehicle, said deformable element being mobile between at least two positions:
- a first position parallel to said second end of said shielding cloth (3);
- a second position not parallel to said second end of said shielding cloth (3), in which it substantially follows a profile defined by the body and/or upholstery (5) of said vehicle,
**characterized in that** said deformable element (1) presents two coupling elements respectively penetrating in openings situated at each of the ends of said rigid element.

2. The roller blind according to claim 1, **characterized in that** said rigid driving element (2) is rectilinear.

3. The roller blind according to any one of claims 1 and 2, **characterized in that** said rigid driving element (2) is a tubular element.

4. The roller blind according to any one of claims 1 to 3, **characterized in that** said deformable element (1) is configured so as to take, in said second position, a non-homogeneous profile, corresponding to the profile defined by the body and/or upholstery (5) of said vehicle.

5. The roller blind according to claim 4, **characterized in that** said non-homogeneous profile is obtained by using at least one of the means belonging to the following group:
- implementation of at least two different materials;
- implementation of at least two different sections;
- addition of at least one reinforcement.

6. The roller blind according to any one of claims 1 to 5, **characterized in that** at least one of said coupling elements is present in the form of an insert (15) penetrating inside the opening of said rigid element (2).

7. The roller blind according to claim 6, **characterized in that** said insert (15) carries a ball guide (16) with a diameter substantially equal to the inner diameter of said opening.

8. The roller blind according to any one of claims 1 to 7, **characterized in that** said deformable element (1) is made from a plastic material or thermoplastic elastomer (TPE).

9. The roller blind according to claim 8, **characterized in that** said deformable element (1) comprises an overmolded steel shaft (81).

10. The roller blind according to any one of claims 1 to 9, **characterized in that** said deformable element (1) carries at least one grip tab (17).

11. The roller blind according to claims 9 and 10, **characterized in that** said tab (17) is clipped onto said steel shaft (81).

12. The roller blind according to any one of claims 1 to 11, **characterized in that** in a pull-out position of said cloth (3), said deformable element (1) follows the shape of an upper part of a window of said vehicle.

13. The roller blind according to any one of claims 1 to 12, **characterized in that** in a folded position of said cloth (3), said deformable element (1) follows the shape of the upholstery (5) of said vehicle, near a slot by which said cloth (3) moves.

14. The roller blind according to any one of claims 1 to 13, **characterized in that** said deformable element (1) presents at least one edge (14) with a size sufficient for hiding a gap between the body and/or upholstery (5) of said vehicle, when said cloth (3) is pulled out and/or folded.

15. An automobile comprising at least one roller blind according to claim 1.

## Patentansprüche

1. Fensterrollo für ein Kraftfahrzeug, umfassend eine Abdeckbahn (3), deren eines erste Ende mit einem Aufwickelrohr (4) verbunden ist und deren zweites Ende fest mit einem Zugstab verbunden ist, wobei dieser Zugstab ein steifes Antriebselement für die Bahn (2) umfasst, das mit dem zweiten Ende der Abdeckbahn (3) verbunden ist, und mindestens ein verformbares Element (1) zum Anhängen an und/oder Abstützen auf einem Element der Karosserie und/oder der inneren Dichtung (5) des Fahrzeugs, wobei dieses verformbare Element zwischen mindestens zwei Positionen beweglich ist:
- einer ersten Position, in der es parallel zum zweiten Ende der Abdeckbahn (3) ist;
- einer zweiten Position, in der es nicht parallel zum zweiten Ende der Abdeckbahn (3) ist und sich annähernd an ein Profil anpasst, das durch die Karosserie und/oder die innere Dichtung (5) des Fahrzeugs definiert wird,
**dadurch gekennzeichnet, dass** das verformbare Element (1) zwei Kupplungselemente aufweist, die jeweils in Öffnungen an jedem der Enden des steifen Elements eindringen.

2. Fensterrollo nach Anspruch 1, **dadurch gekennzeichnet, dass** das steife Antriebselement (2) geradlinig ist.

3. Fensterrollo nach einem beliebigen der Ansprüche 1 und 2, **dadurch gekennzeichnet, dass** das steife Antriebselement (2) ein rohrförmiges Element ist.

4. Fensterrollo nach einem beliebigen der Ansprüche 1 bis 3, **dadurch gekennzeichnet, dass** das verformbare Element (1) so ausgestaltet ist, dass es in der zweiten Position ein uneinheitliches Profil annimmt, das dem durch die Karosserie und/oder die innere Dichtung (5) des Fahrzeugs definierten Profil entspricht.

5. Fensterrollo nach Anspruch 4, **dadurch gekennzeichnet, dass** das uneinheitliche Profil mit Hilfe von mindestens einem der Mittel aus der folgenden Gruppe erhalten wird:
- Einsatz von mindestens zwei verschiedenen Materialien;
- Einsatz von mindestens zwei verschiedenen Querschnitten;
- Hinzufügen von mindestens einer Aussteifung.

6. Fensterrollo nach einem beliebigen der Ansprüche 1 bis 5, **dadurch gekennzeichnet, dass** mindestens eines der Elemente der Befestigung in Form eines Einsatzes (15) vorliegt, der in die Öffnung des steifen Elements (2) eindringt.

7. Fensterrollo nach Anspruch 6, **dadurch gekennzeichnet, dass** dieser Einsatz (15) eine Führungskugel (16) trägt, deren Durchmesser annähernd gleich dem Innendurchmesser der Öffnung ist.

8. Fensterrollo nach einem beliebigen der Ansprüche 1 bis 7, **dadurch gekennzeichnet, dass** das verformbare Element (1) aus Kunststoff oder thermoplastischem Polybutaden-Elastomer (TPE) besteht.

9. Fensterrollo nach Anspruch 8, **dadurch gekennzeichnet, dass** das verformbare Element (1) eine angeformte Stahlachse (81) umfasst.

10. Fensterrollo nach einem beliebigen der Ansprüche 1 bis 9, **dadurch gekennzeichnet, dass** das verformbare Element (1) mindestens eine Grifflasche (17) trägt.

11. Fensterrollo nach den Ansprüchen 9 und 10, **dadurch gekennzeichnet, dass** die Lasche (17) an die Stahlachse (81) angeklipst ist.

12. Fensterrollo nach einem beliebigen der Ansprüche 1 bis 11, **dadurch gekennzeichnet, dass** sich das verformbare Element (1) in der ausgezogenen Position der Bahn (3) an die Form eines oberen Teils einer Scheibe des Fahrzeugs anpasst.

13. Fensterrollo nach einem beliebigen der Ansprüche 1 bis 12, **dadurch gekennzeichnet, dass** sich das verformbare Element (1) in der eingezogenen Position der Bahn (3) an die Form der inneren Dichtung (5) des Fahrzeugs anpasst, in der Nähe eines Schlitzes, durch den diese Bahn (3) läuft.

14. Fensterrollo nach einem beliebigen der Ansprüche 1 bis 13, **dadurch gekennzeichnet, dass** das verformbare Element (1) mindestens eine Flanke (14) aufweist, die groß genug ist, um einen Spalt zwischen der Karosserie und/oder der inneren Dichtung (5) des Fahrzeugs zu verdecken, wenn die Bahn (3) ausgezogen und/oder eingezogen ist.

15. Kraftfahrzeug, das mindestens ein Fensterrollo nach Anspruch 1 umfasst.
